# EUROPEAN PATENT SPECIFICATION

(11) **EP 1 126 770 B1**
(45) Date of publication and mention of the grant of the patent: **01.10.2003**
(21) Application number: 99971675.6
(22) Date of filing: 05.11.1999
(51) Int. Cl.: A46D 1/00, B32B 31/00, B32B 33/00, B32B 35/00, C08F 283/04, C08G 18/40, C08G 63/91, C08J 11/04, C08J 11/24, D06N 7/00

(54) **SEPARATION OF FLOOR COVERING COMPONENTS FOR RECYCLING**
TRENNUNG DER KOMPONENTEN EINES BODENBELAGS ZU DEREN WIEDERVERWERTUNG
SEPARATION DE CONSTITUANTS DE REVETEMENT DE SOL EN VUE DE LEUR RECYCLAGE

(30) Priority: 05.11.1998 US 107208 P
(43) Date of publication of application: 29.08.2001
(73) Proprietor: INTERFACE, INC., Atlanta, Georgia 30339 (US)
(72) Inventor: BERARD, Raymond A., Kennesaw, GA 30144 (US)
(74) Representative: Weston, Robert Dale
(86) International application number: US9925757
(87) International publication number: WO00027245

(56) References cited:
- EP-A- 0 771 828
- US-A- 4 020 020
- US-A- 5 204 155
- US-A- 5 534 556
- US-A- 5 648 431
- US-A- 5 879 608

## Description

### BACKGROUND OF THE INVENTION

### 1. Field of the Invention

This invention relates to methods for recycling floor coverings, such as carpet or carpet tile, and in particular, for recycling carpet or carpet tile having a backing, precoat, or adhesive layer containing polyurethanes.

### 2. Description of the Related Art

Polyurethane resins, which are the reaction products of polyisocyanates and polyols, can be used in a variety of different applications, including in the backing, precoat, or adhesive layers of carpet and carpet tiles. However, the use of virgin polyurethane requires the use and handling of significant quantities of polyisocyanates (as used herein, the term "polyisocyanate" includes diisocyanates, as well as isocyanates having more than two isocyanate moieties), which can cause health and safety problems, and require a high degree of care in handling and disposal. In order to reduce the reliance on virgin polyurethane, and the need for handling of, and exposure to, polyisocyanates, it would be desirable to reuse polyurethanes in existing carpets and carpet tiles.

Traditional approaches to recycling and reuse have involved separating the individual components to be reused or making do with mixtures of components, which often render the recycled materials suitable for only uses in products of a quality lower than that of the recycled product. Separating individual components of multilayered products, while often more feasible than separating more homogeneous mixtures, can nevertheless present significant difficulties where the layers are held together with adhesive. Often, the separation processes render one or more of the components unusable, or usable only after significant additional processing. For example, processes that involve heating polyurethanes to very high temperatures can often result in irreversible degradation of the polyurethane molecule, in effect "downgrading" it by rendering it unsuitable for recycle or reuse in applications where it will have an equivalent value to virgin polyurethane.

Document US-A-5648431 and document EP-A-0771828 both disclose methods of recycling granulated foams by way of glycolysis (as with an organic polyol) under the effects of elevated temperatures followed by reconstitution of a polyurethane foam by the addition of a polyisocyanate. Neither document discloses recycling a floor covering, comprising a facecloth layer and a backing layer and at least one layer containing a polyurethane.

### SUMMARY OF THE INVENTION

This invention relates to methods of recycling and reusing floor coverings, such as carpet or carpet tile having polyurethane therein, such as in the secondary backing, or in the precoat locking the fibers into the primary backing, or in the adhesive bonding the primary backing to the secondary backing, or in moisture barrier layers in the product.

The methods of this invention allow the polyurethane to be reused without isolating it from other components in the secondary backing or adhesive, and requires significantly decreased quantities of polyisocyanate.

The methods of this invention can be adapted to continuous recycling of polyurethane-containing carpet components and continuous reuse in preparation of different carpet or carpet tile.

In addition, the invention allows the polyurethane in the floor covering products to be reliquefied at temperatures low enough to avoid significant or irreversible degradation of the polyurethane molecule. This allows the polyurethane to be resolidified easily by addition of isocyanate. The invention can therefore be used to recycle and reuse products in a way that achieves products equivalent in quality to those that are recycled.

According to the present invention a method for processing a floor covering comprising a facecloth layer, a backing layer, and optionally an adhesive or precoat layer, wherein the floor covering comprises at least one layer containing a polyurethane formed by reacting a polyisocyanate and a first organic polyol, comprises:-
contacting the floor covering with a second organic polyol;
heating the floor covering and second organic polyol;
   and,
separating facecloth layer from the backing layer.

In a preferred embodiment of the present invention, the second organic polyol is the same as the first organic polyol.

According to a first embodiment, the method of the present invention comprises increasing the temperature of the floor covering and second organic polyol sufficiently to at least partially liquefy the polyurethane. This embodiment of the invention can be advantageously used with either carpet or carpet tile, or scraps thereof.

According to a second embodiment, the method of the present invention comprises depositing the second organic polyol onto the facecloth layer of the floor covering and pulling the facecloth layer away from the backcloth layer. Additional material of the type used to form the adhesive or secondary backing, and having additional polyisocyanate, can be applied to the surface of the secondary backing, which can then be adhered to a new facecloth layer. This embodiment of the present invention has the additional advantage that the original facecloth layer can also be reused by adhering it to a different secondary backing, if desired. No. separation of tufted material or facecloth from the primary backing is necessary.

The method of the present invention can be used for recycling or reusing floor coverings having a foamed polyurethane backing, a moisture-barrier layer containing urethane (such as a urethane-modified bitumen), or both. This method involves contacting the polyurethane or urethane-modified bitumen (or both) with polyol and heating. The method can be used by, e.g.; spraying the face cloth of the floor covering with polyol. This method of application can be used even where a latex precoat (e.g., an EVA latex) has been used on the surface of the primary backing or of the facecloth, as the polyol will penetrate the precoat and reach at least the urethane-containing moisture barrier layer.

### BRIEF DESCRIPTION OF THE DRAWINGS

The above and other features of the present invention can be more clearly understood by reference to the following drawings, which are not intended to limit the scope of the invention in any way.

FIG. 1 is a schematic diagram showing reversible polymerization reactions forming polyurethanes, and schematically illustrating the role of the second organic polyol in the invention.

FIG. 2 is a schematic diagram showing a method for separating the facecloth-containing layer from the backing-containing layer of a floor covering, according to one embodiment of this invention.

### DETAILED DESCRIPTION OF SPECIFIC EMBODIMENTS

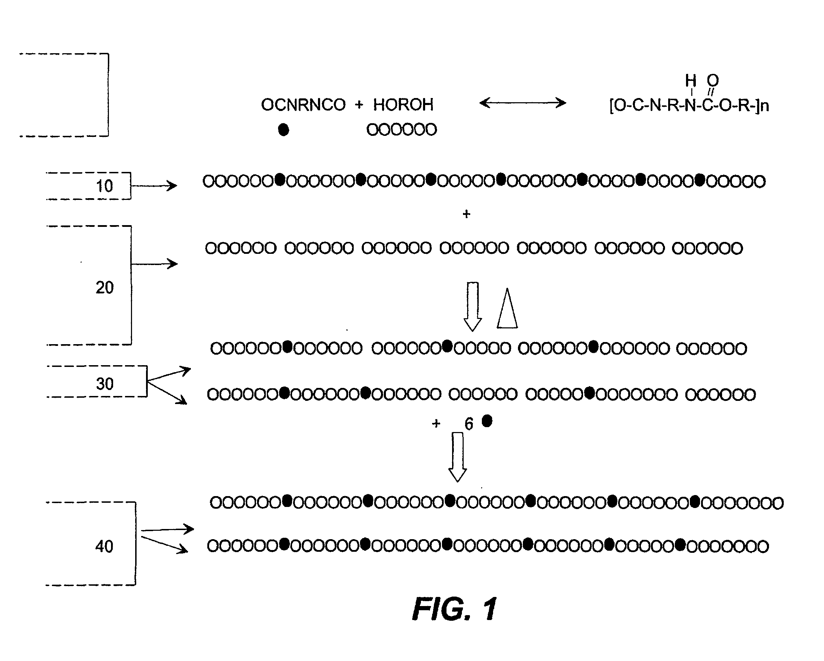

This inventor has found that if a polyurethane material is used as the backing of a floor covering material, such as carpet or carpet tile, whether as part of the backing itself, or in an adhesive or precoat layer which bonds the tufts in place and bonds the facecloth to the backing, or as a moisture barrier or other layer in the floor covering material, or all of these, then there is the potential for a simple separation of components. In particular, it has been found that Polycarbite™, which is a urethane-modified bitumen, and can be thought of as a combination of an asphalt and polyurethane (the chemistry of which is described in U. S. Patent No. 5,096,764 to Terry *et al*., which is incorporated herein in its entirety by reference), can be recycled and reused using methods according to this invention. As indicated in FIG. 1, the reaction of a diol with a diisocyanate produces a polyurethane. The reaction is reversible. If, for example, in the case of a Polycarbite™, the polymer is produced using a hydroxy terminated polybutadiene (PolyBD) and methylene para-phenylene diisocyanate (MDI) blended with the asphalt, a solid Polycarbite™ material is obtained.

As used herein, the term "facecloth" refers to the fabric material forming the outermost surface of a floor covering, i.e., the cloth that is typically seen and walked on. As used herein, this term includes material serving as a primary backing (typically a woven or nonwoven fabric into which pile fibers are tufted). The term "backing" refers to material supporting the facecloth, often referred to as a secondary backing (typically a solid, possibly multilayered, polymeric material serving to provide cushioning and dimensional stability to the floor covering material, and typically bonded somehow to the primary backing or facecloth). Often, the undersurface of the primary backing or facecloth is coated with a "precoat," typically a latex, such as EVA, which performs functions such as locking the tufted fibers into place, supporting and releasing biocides and other active ingredients, adhering the primary backing or facecloth to the secondary backing, etc. As explained in more detail below, this invention functions in part by reversibly softening and/or liquefying a layer in the floor covering material that contains polyurethane, so that a layer of material containing the facecloth can be separated from a layer of material containing the backing. This layer may be the secondary backing itself, in which case at least the upper surface thereof is softened and/or partially liquefied and a layer containing the face cloth (and, in the case of tufted facecloth, the primary backing) is removed from the secondary backing. In other cases, the polyurethane-containing layer may be an intermediate layer, such as a urethane-modified bitumen moisture barrier layer. In this situation, the layers below the softened polyurethane-containing layer in the floor covering structure (called herein the "backing-containing layer" or simply the "backing" or "backing layer") would be separated from the layers above the polyurethane-containing layer (called herein the "facecloth-containing layer" or simply the "facecloth" or "facecloth layer"). Accordingly, those skilled in the art will recognize that in describing or claiming the separation of facecloth or a facecloth layer or a facecloth-containing layer from a backing or a backing layer or a backing-containing layer, additional layers of material may be attached or adhered to the facecloth or secondary backing per se, depending upon the position in the floor covering laminate of the polyurethane-containing material that is softened by the process of the invention

The urethane portion of the material, which provides it with flexibility, is shown as a polymer chain 10 in FIG. 1. When liquid polyol, i.e., the second organic polyol, for example Poly BD, shown schematically in FIG. 1 as liquid molecules 20, is added to the system and heated, the isocyanate will exchange the first organic polyol, bonded to the remainder of the polymer chain, with the second organic polyol and produce shorter chains, which can be liquefied with increasing temperature. These liquid molecules are shown schematically in FIG. 1 as molecules 30. Thus, the heating of the carpet or carpet tile and polyol combination typically at least partially liquefies the polyurethane-containing layer. If additional diisocyanate is then added, the system can be resolidified, shown schematically as a solid polymer chain 40 in FIG. 1. In effect, the system acts as a chemical zipper. It will be understood by those of skill in the art that this schematic representation is merely illustrative of one way in which the solid polymer chain may be softened or liquefied by the polyol, and that other groupings of polyisocyanate and polyol may result.

The methods of this invention can be used with any polyurethane and is not limited to urethane modified bitumens, such as Polycarbite™. In general, it is desirable to use the same polyol to liquefy the solid material as was reacted with the polyisocyanate to form the original polyurethane. For example, with carpet or carpet tile having a polyurethane foam backing, the same polyol can be used to liquefy the backing as was used to form the polyurethane originally. In the case of a foam, the liquefied backing is combined with additional isocyanate and passed through a frothing unit, so that the polyurethane foam can be reformed. With Polycarbite™, by using the Poly BD as the liquefying agent, the solid backing layer can be reformed merely with additional polyisocyanate. This embodiment of this invention is particularly suitable for use in recycling the scraps produced as a consequence of the manufacturing process for making carpet and carpet tile.

In one embodiment of this invention, which is applicable to carpet and carpet tile, as well as scrap material, the recycled floor covering product (e.g. carpet tile) can be shredded and/or ground into smaller pieces,- placed in a reactor with organic polyol, and heated. In this embodiment, the polyurethane-containing material, which may be the backing layer, or the precoat or adhesive layer, or both, is at least partially liquefied by heating (in the case of Polycarbite™, to a temperature of approximately 100°C), the facecloth components and any fibers present (e.g., glass reinforcing scrim) strained out, and the liquefied backing reused in the standard carpet or carpet tile system by adding additional diisocyanate to reform the Polycarbite™ backing.

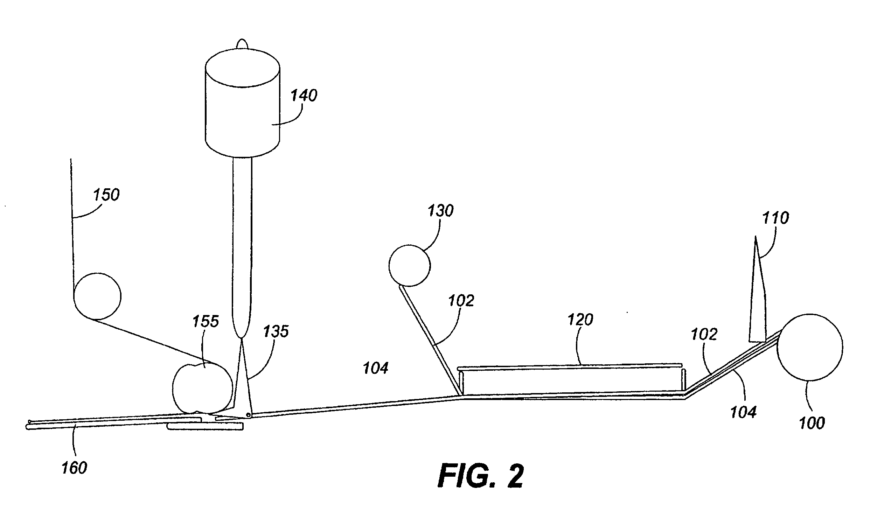

Another embodiment of this invention is particularly suitable for use with a complete roll of carpet that can be removed from the floor. In this embodiment, illustrated schematically in FIG. 2, the backing is separated from the facecloth by merely spraying additional polyol onto one or more surfaces of the carpet, such as on the facecloth surface. When applied to the facecloth, the attack by the polyol occurs only at the interface between the facecloth-containing layer and the Polycarbite™ or other polyurethane-containing layer. The facecloth-containing layer can, therefore, be stripped away from the backing-containing layer after the application of heat, and the backing-containing layer can be continuously processed in the manufacturing of new carpet or carpet tile, by applying additional Polycarbite™ (with excess isocyanate) and a new facecloth-containing layer: in effect, the backing is reused entirely. New carpet is then produced merely by the addition of a new facecloth and a small quantity of Polycarbite™. The old facecloth can then optionally be cleaned of any residual Polycarbite™ by contacting with solvent, and can be recycled separately. A major advantage of this embodiment is the reuse of the backing directly, with no reprocessing necessary, and the concomitant decrease in use of polyisocyanates.

This embodiment of the invention is shown schematically in FIG. 2. Recycled floor covering material 100, comprising a facecloth-containing layer 102 and a backing-containing layer 104 is contacted with polyol spray 110, desirably on the facecloth-containing side of the floor covering material. The polyol-sprayed floor covering material is then heated by passing it near a heat source, such as a hot plate 120. The material remains sufficiently close to the heat source for a sufficient time to soften and at least partially liquefy the polyurethane in the material according to the mechanisms shown in FIG. 1. The facecloth-containing layer 102 is peeled away from backing-containing layer 104, and collected by roller 130. The backing-containing layer 104 is then contacted with additional polyurethane-containing material 135, such as Polycarbite™ that has been enriched with a slight excess of polyisocyanate, desirably the same diisocyanate used to make the polyurethane material itself applied by applicator 140. A new facecloth-containing layer 150 is then married to the backing-containing layer 104 using, e.g., nip roller 155, to form recycled floor covering product 160. Original facecloth-containing layer 102 can then be separately recycled, e.g., by removing any residual polyurethane containing material from its undersurface (if desired or necessary for the recycling process) and marrying the facecloth or facecloth-containing layer to a backing or backing-containing layer.

This embodiment of the invention can also be used with a standard polyurethane, which can be used directly, since the complete structure is a polyurethane. When the precoat or adhesive layer contains a Polycarbite™, it is particularly important that the polyol used in the reaction be partially soluble in the asphalt, as is the PolyBD. As a result, it is best to use the same polyol as was used to make the original polyurethane structure, since the final structure then becomes equivalent to the original.

Polycarbite™ urethane-modified bitumen has also been used as a moisture barrier layer, as disclosed in U.S. Patent No. 5,763,036. The moisture barrier properties of Polycarbite™ urethane-modified bitumen can be used in floor covering products like those described in International Patent Specification No. WO 99/19557. The floor covering products disclosed in this publication can have a polyurethane resilient backing, a Polycarbite™ urethane-modified bitumen layer, an optional latex precoat, and the floor covering facecloth. The process of the invention is equally applicable to recycling this floor covering product, since a polyol can be sprayed onto the face cloth, and will penetrate the latex precoat and, on heating, liquefy the urethane-modified bitumen layer, and possibly also the polyurethane resilient backing. Additional or a different polyol can be applied to the resilient polyurethane backing if sufficient penetration is not achieved by application to the face cloth and if liquefaction of the polyurethane resilient backing is desired. However, typically, application of the polyol to the face cloth followed by passing the floor covering over a heat source is sufficient to soften/liquefy the Polycarbite™ urethane-modified bitumen in the moisture barrier or intermediate layer, and the facecloth can be stripped from the backing, as shown in Fig. 2. The recycled backing can then receive, e.g., a new layer of urethane-modified bitumen having excess isocyanate present, and can be bonded to a new facecloth. The original facecloth, with or without removal of the Polycarbite ™ urethane-modified bitumen layer, can also be recycled by bonding with a new backing layer.

The amount of polyol added to the floor covering will, to a large extent, need to be determined by routine experiment with the particular floor covering product to be recycled, since different floor coverings will contain different amounts of polyurethane. Generally, the amount of polyol is sufficient to saturate the topcloth (if applied on the topcloth side and reach and soften the urethane-containing layer. If the secondary backing is to be liquefied and refoamed, then sufficient polyol can be directly applied to the secondary backing itself. Generally, the polyol is applied to the floor covering in a way that will allow it to contact the polyurethane-containing layer near the interface between the polyurethane-containing layer and the facecloth, so that the softening/partial liquefaction of the urethane allows the facecloth to be more easily removed. The temperature to which the polyol treated floor covering is heated during the heating step will also vary to some extent with the amount and type of polyurethane used, but is easily determinable in accordance with the present invention by one of skill in the art using only routine experimentation. Generally, the heating temperature is around 90°C to about 120 °C, more typically, around 100 °C. Typically, the temperature to which the polyol-treated floor covering material is heated is well below the normal melting point or decomposition temperature of the polyurethane or of the other materials in the polyurethane-containing layer.

It will be understood by those of skill in the art that the above-described embodiments leave the backing layer essentially intact, allowing it to be recycled as a backing material without significant further processing. However, it is also possible, using the present invention, to more completely liquefy the polyurethane-containing layer for reuse. For example, if the floor covering material has a backing layer containing predominantly polyurethane (e.g., a polyurethane foam), this layer can be contacted with polyol, heated, and liquefied, and the liquefied material contacted with additional polyisocyanate and added to a process for foaming virgin polyurethane into new foamed polyurethane backing. Loadings of recycled polyurethane as high as 20 wt% have been successfully foamed, and higher loadings may be possible.

## Claims

1. A method for processing a floor covering (100) comprising a facecloth layer (102), a backing layer (104), and optionally an adhesive or precoat layer, wherein the floor covering comprises at least one layer containing a polyurethane formed by reacting a polyisocyanate and a first organic polyol, **characterised by the steps of:-**
a) contacting the floor covering (100) with a second organic polyol (110);
b) heating (120) the floor covering and second organic polyol;
and,
c) separating the facecloth layer (102) from the backing layer (104).

2. The method of claim 1 **and further characterised in that** step b) comprises increasing the temperature of the floor covering (100) and second organic polyol (110) sufficiently to at least partially liquefy the polyurethane.

3. The method of claim 1 or claim 2 **and further characterised in that** step a) comprises grinding floor covering (100) into smaller pieces and mixing these pieces with the second organic polyol (110).

4. The method of any of claims 1 to 3 **and further characterised in that** the polyurethane-containing layer is the backing layer (104) or the adhesive or precoat layer, or both.

5. The method of claim **4 and further characterised in that** the polyurethane-containing layer (104) comprises a urethane-modified bitumen.

6. The method of claim **4 and further characterised by the step of** reconstituting the backing layer (104) by contacting it with additional polyisocyanate (135).

7. The method of any of claims 1 to 6 **and further characterised in that** the first organic polyol and the second organic polyol (110) are the same.

8. The method of claim 1 or claim 2 **and further characterised in that** step a) comprises disposing the second organic polyol (110) onto the facecloth layer (102) of the floor covering (100) and pulling the facecloth layer away from the backing layer (104).

9. The method of claim 8 **and further characterised in that** the backing layer (104) is contacted with a material containing additional polyisocyanate (135) and adhered to a second facecloth layer (150); to form a second floor covering (160).

10. The method of claim 8 or claim 9 **and further characterised by the step of** contacting the facecloth layer (104) with a second backing layer.

11. The method of any of claims 1 to 10 **and further characterised in that** the layer containing the polyurethane is disposed between a precoat layer and the backing layer (104).

12. The method of any of claims 2 to 11 **and further characterised in that** the backing layer (104) comprises foamed polyurethane and is the polyurethane containing layer to be liquefied.

13. The method of claim 12 **and further characterised in that** the liquefied polyurethane obtained from the backing layer (104) is refoamed with added polyisocyanate.

## Patentansprüche

1. Verfahren zur Verarbeitung eines Bodenbelags (100), umfassend eine Florschicht (102), eine Stützschicht (104) und wahlweise eine Klebeschicht oder Zwischenschicht, worin der Fußbodenbelag mindestens eine Schicht umfasst, die ein Polyurethan, hergestellt durch Umsetzung eines Polyisocyanats mit einem ersten organischen Polyol, enthält, welches **gekennzeichnet ist durch** die folgenden Schritte:
a) Zusammenbringen des Bodenbelags (100) mit einem zweiten organischen Polyol (110);
b) Erwärmen (120) des Bodenbelags und des zweiten organischen Polyols;
und,
c) Abtrennen der Florschicht (102) von der Stützschicht (104).

2. Verfahren nach Anspruch 1, weiterhin **dadurch gekennzeichnet, dass** der Schritt b) ein Erwärmen des Bodenbelags (100) und des zweiten organischen Polyols (110) umfasst, das ausreicht, um das Polyurethan mindestens teilweise zu verflüssigen.

3. Verfahren nach Anspruch 1 oder Anspruch 2, weiterhin **dadurch gekennzeichnet, dass** der Schritt a) das Zermahlen des Bodenbelags (100) zu kleineren Teilen und das Vermischen dieser Teile mit dem zweiten organischen Polyol (110) umfasst.

4. Verfahren nach einem der Ansprüche 1 bis 3, weiterhin **dadurch gekennzeichnet, dass** die polyurethanhaltige Schicht die Stützschicht (104) oder die Klebeschicht bzw. Zwischenschicht oder beides ist.

5. Verfahren nach Anspruch 4, weiterhin **dadurch gekennzeichnet, dass** die polyurethanhaltige Schicht ein polyurethanmodifizierles Bitumen umfasst.

6. Verfahren nach Anspruch 4, weiterhin **gekennzeichnet durch** den Schritt der Wiederherstellung der Stützschicht (104), indem sie mit weiterem Polyisocyanat (135) in Kontakt gebracht wird.

7. Verfahren nach einem der Ansprüche 1 bis 6, weiterhin **dadurch gekennzeichnet, dass** das erste organische Polyol und das zweite organische Polyol (110) gleich sind.

8. Verfahren nach Anspruch 1 oder Anspruch 2, weiterhin **dadurch gekennzeichnet, dass** der Schritt a) das Aufbringen des zweiten organischen Polyols (110) auf die Florschicht (102) des Bodenbelags (100) und das Abziehen der Florschicht von der Stützschicht (104) umfasst.

9. Verfahren nach Anspruch 8, weiterhin **dadurch gekennzeichnet, dass** die Stützschicht (104) mit einem Material zusammengebracht wird, das weiteres Polyisocyanat (135) enthält und an einer zweiten Florschicht (150) haftet, um einen zweiten Bodenbelag (160) zu bilden.

10. Verfahren nach Anspruch 8 oder Anspruch 9, weiterhin **gekennzeichnet durch** den Schritt des Zusammenbringens der Florschicht (104) mit einer zweiten Stützschicht.

11. Verfahren nach einem der Ansprüche 1 bis 10, weiterhin **dadurch gekennzeichnet, dass** die Schicht, die das Polyurethan enthält, zwischen einer Zwischenschicht und der Stützschicht (104) aufgebracht ist.

12. Verfahren nach einem der Ansprüche 2 bis 11, weiterhin **dadurch gekennzeichnet, dass** die Stützschicht (104) geschäumtes Polyurethan umfasst und die polyurethanhaltige Schicht ist, die verflüssigt werden soll.

13. Verfahren nach Anspruch 12, weiterhin **dadurch gekennzeichnet, dass** das aus der Stützschicht (104) erhaltene verflüssigte Polyurethan mit zugegebenem Polyisocyanat emeut aufgeschäumt wird.

## Revendications

1. Méthode pour le traitement d'un revêtement de sol (100) comprenant une couche de parement (102), une couche d'appui (104) et facultativement une couche adhésive ou pré-couche où le revêtement de sol comprend au moins une couche contenant un polyuréthanne, formé par réaction d'un polyisocyanate et d'un premier polyol organique, **caractérisée par** les étapes de :
a) mettre en contact le revêtement de sol (100) avec un second polyol organique (110) ;
b) chauffer (120) le revêtement de sol et le second polyol organique ; et
c) séparer la couche de parement (102) de la couche d'appui (104).

2. Méthode de la revendication 1 et **caractérisée de plus en ce que** l'étape b) comprend l'augmentation de la température du revêtement de sol (100) et du second polyol organique (110) suffisamment pour au moins partiellement liquéfier le polyuréthanne.

3. Méthode de la revendication 1 ou de la revendication 2 et **caractérisée de plus en ce que** l'étape a) consiste à broyer le revêtement de sol (100) en petits morceaux et à mélanger ces petits morceaux avec le second polyol organique (110).

4. Méthode de l'une quelconque des revendications 1 à 3 et **caractérisée de plus en ce que** la couche contenant du polyuréthanne la couche d'appui (104) ou la couche adhésive ou pré-couche ou les deux.

5. Méthode de la revendication 4 et **caractérisée de plus en ce que** la couche (104) contenant du polyuréthanne comprend un bitume modifié à l'uréthanne.

6. Méthode de la revendication 4 et **caractérisée de plus par** l'étape de reconstituer la couche d'appui (104) par mise en contact avec du polyisocyanate additionnel (135).

7. Méthode de l'une quelconque des revendications 1 à 6 et **caractérisée de plus en ce que** le premier polyol organique et le second polyol organique (110) sont les mêmes.

8. Méthode de la revendication 1 ou de la revendication 2 et **caractérisée de plus en ce que** l'étape a) consiste à disposer le second polyol organique (110) sur la couche de parement (102) du revêtement de sol (100) et à tirer la couche de parement au loin de la couche d'appui (104).

9. Méthode de la revendication 8 et **caractérisée de plus en ce que** la couche d'appui (104) est contactée par un matériau contenant du polyisocyanate additionnel (135) et qui adhère à une seconde couche de parement (150) pour former un second revêtement de sol (160).

10. Méthode de la revendication 8 ou de la revendication 9 et **caractérisée de plus par** l'étape de mettre en contact la couche de parement (104) avec une seconde couche d'appui.

11. Méthode de l'une quelconque des revendications 1 à 10 et **caractérisée de plus en ce que** la couche contenant le polyuréthanne est disposée entre une pré-couche et la couche d'appui (104).

12. Méthode de l'une quelconque des revendications 2 à 11 et **caractérisée de plus en ce que** la couche d'appui (104) comprend du polyuréthanne mousse et est la couche contenant du polyuréthanne à liquéfier.

13. Méthode de la revendication 12 et **caractérisée de plus en ce que** le polyuréthanne liquéfié obtenu à partir de la couche d'appui (104) est remoussé avec du polyisocyanate ajouté.
